# EUROPÄISCHE PATENTSCHRIFT

(11) **EP 0 877 331 B1**
(45) Veröffentlichungstag und Bekanntmachung des Hinweises auf die Patenterteilung: **20.08.2003**
(21) Anmeldenummer: 98107483.4
(22) Anmeldetag: 24.04.1998
(51) Int. Cl.: G06K 7/00, G06K 19/07

(54) **Drahtloses Datenübertragungssystem**
Wireless communicationsystem
Système de communication sans fil

(30) Priorität: 09.05.1997 DE 19719562
(43) Veröffentlichungstag der Anmeldung: 11.11.1998
(73) Patentinhaber: Stobbe, Anatoli, 30890 Barsinghausen (DE)
(72) Erfinder: Stobbe, Anatoli, 30890 Barsinghausen (DE)
(74) Vertreter: Patentanwälte Thömen & Körner

(56) Entgegenhaltungen:
- EP-A- 0 441 237
- EP-A- 0 634 729
- PATENT ABSTRACTS OF JAPAN vol. 099, no. 002, 26. Februar 1999 (1999-02-26) & JP 10 307898 A (TOPPAN PRINTING CO LTD), 17. November 1998 (1998-11-17)

## Beschreibung

Die Erfindung betrifft ein drahtloses Datenübertragungssystem nach dem Oberbegriff des Anspruchs 1.

Aus der DE PS 40 03 410 C2 ist ein Datenübertragungssystem gemäß des Oberbegriffs von Anspruch 1 bekannt. Dieses bekannte System umfaßt eine Schreibleseeinheit mit einem Datensender, einem Datenempfänger, einem Speicher und einer Eingabeeinheit sowie ein Detektierplättchen mit einem Datensender, einem Datenempfänger und einem Speicher. Der Datensender der Schreibleseeinheit ist gleichzeitig als Energiesender ausgebildet und überträgt die zum Betrieb des Detektierplättchens nötige Energie zu einem Energieempfänger auf dem Detektierplättchen.

Das Detektierplättchen und die Schreibleseeinheit können beide mobil oder eines der beiden Komponenten kann mobil und das andere stationär betrieben werden. Bei Einsatz in einer Zugangskontrolle kann die Schreibleseeinheit stationär angeordnet und mit einem Türöffner verbunden sein. Die Energieversorgung der Schreibleseeinheit und des Türöffners erfolgt aus dem Niederspannungsnetz. Die Detektierplättchen werden von zugangsberechtigten Personen getragen. Sobald ein Detektierplättchen in die Nähe einer Antenne der Schreibleseeinheit gebracht wird, werden deren Daten von der Schreibleseeinheit gelesen und auf Gültigkeit überprüft. Bei Gültigkeit wird der Türöffner freigegeben. Durch Beschreiben des Speichers des Detektierplättchens können Daten und damit Zugangsberechtigungen geändert werden.

Bei Ausfall der Energieversorgung ist das Datenübertragungssystem außer Betrieb. Die Tür kann dann nur noch durch einen konventionellen mechanischen Schlüssel geöffnet werden, was aber die Sicherheit gegen Manipulationsmöglichkeiten mindert.
Durch Batteriebetrieb oder Pufferbetrieb können bei regelmäßiger Wartung zwar die Folgen plötzlicher, unerwarteter Energieversorgungsausfälle beseitigt werden, bei mangelnder Wartung ist diese Sicherheit gegen Netzausfälle aber wieder verloren.

Der Erfindung liegt die Aufgabe zugrunde, bei einem drahtlosen Datenübertragungssystem die Funktionssicherheit und Manipulationssicherheit zu verbessern.

Diese Aufgabe wird bei einem drahtlosen Datenübertragungssystem nach dem Oberbegriff des Anspruchs 1 durch die im kennzeichnenden Teil angegebenen Merkmale gelöst. Weiterbildungen und vorteilhafte Ausgestaltungen der Erfindung ergeben sich aus den Unteransprüchen.

Bei der erfindungsgemäßen Lösung kann die Empfangseinrichtung manipulationssicher eingebaut oder untergebracht werden, da die Energieversorgung aller Komponenten, also einschließlich des Sensors und/oder Aktors auf drahtlosem Weg erfolgt und damit stets von außen sichergestellt werden kann. Die Funktionszuverlässigkeit ist dadurch so hoch, daß Notmaßnahmen zur Überbrückung von Störungen, die gleichseitig aber auch die Manipulationssicherheit beeinträchtigen würden, entfallen können.

Für die Energieversorgung des Sensors und/oder Aktors bieten sich mehrere Möglichkeiten. So kann der Energieempfänger einen temporären Energiespeicher umfassen, der durch Energieübertragung von der Geberanordnung zur Empfangseinrichtung aufladbar ist und kurzzeitig die Energieversorgung des Sensors und/oder Aktors übernimmt.

Bei dieser Lösung muß die Energieübertragung nicht gleichzeitig mit dem Betrieb des Sensors und/oder Aktors erfolgen. Außerdem besteht die Möglichkeit, bei einem geringen durchschnittlichen Energiefluß zum Energieempfänger kurzzeitig erhöhten Energiebedarf zu decken.

Andererseits kann die Energieversorgung des Sensors und/oder Aktors ausschließlich durch drahtlose Energieübertragung während dessen Betrieb erfolgen.

Diese Lösung kommt ohne Energiespeicher aus, was räumliche Vorzüge bietet. Allerdings muß der drahtlose Energiefluß auch den Spitzenbedarf beim Betrieb des Sensors und/oder Aktors decken können, so daß der Eneregiesender entsprechend leistungsstark ausgelegt sein muß.

Alternativ kann als Kombination beider vorgenannter Lösungen auch vorgesehen werden, daß die Energieversorgung des Sensors und/oder Aktors sowohl durch drahtlose Energieübertragung während dessen Betrieb als auch durch Pufferung durch einen temporären Energiespeichers erfolgt, der durch drahtlose Energieübertragung aufladbar ist.

Bei dieser Lösung kann der Energiespeicher kleiner als bei der erstgenannten Variante bemessen werden, da er nur zur Überbrückung von Energiespitzen benötigt wird.

Der Energiesender kann zusammen mit dem Datensender und Datenempfänger der Geberanordnung vereint oder als gesondertes Gerät ausgebildet sein.

Je nach erforderlicher Sendeleistung des Energiesenders und dem Umstand, ob eine drahtlose Energieübertragung generell oder nur bei Ausfall der regulären Energieversorgung vorgenommen werden soll, kann die eine oder andere Variante gewählt werden. Wenn der Energiesender mit dem Datensender und Datenempfänger der Geberanordnung vereint wird, erhöht sich dessen Gewicht und Baugröße, während im anderen Fall zwar im Normalfall die Handhabung der Geberanordnung einfacher ist, bei Ausfall der Energieversorgung aber ein zusätzliches Gerät benötigt wird.

Die Empfangseinrichtung kann einen Dekoder umfassen, welcher auf Anforderung der Steuereinheit der Empfangseinrichtung von der Geberanordnung gesendete Autentifikationsdaten auswertet und bei Gültigkeit der Autentifikationsdaten den Speicher und/oder Sensor und/oder Aktor freigibt.

Diese Maßnahme erhöht die Sicherheit gegen Manipulationen, indem unter Gebereinheiten, die das Übertragungsprotokoll für die Datenübertragung zur Empfangseinrichtung und zurück beherrschen, selektiv Berechtigungen vergeben werden können, die von der Empfangseinrichtung abgefragt werden. Die Berechtigungen lassen sich durch Ändern der Speicherinhalte ebenfalls ändern.

Gemäß einer Weiterbildung können sowohl im Speicher der Geberanordnung als auch im Speicher der Empfangseinrichtung Autentifikationsdaten abgelegt sein. Ferner können sowohl in der Geberanordnung als auch in der Empfangseinrichtung Dekoder vorgesehen sein, mittels der die auf Anforderung gegenseitig übermittelten Autentifikationsdaten auf Gültigkeit überprüfbar sind. Es kann ein bidirektionaler Datenaustausch zwischen Geberanordnung und Empfangseinrichtung stattfinden und erst bei Gültigkeit beider Autentifikationsdaten der Speicher der Empfangseinrichtung und/oder der Sensor und/oder der Aktors freigegeben werden.

Die Manipulationssicherheit wird hierdurch nochmals gesteigert. Wenn der Versuch unternommen wird, die Autentifikationsdaten durch "Abhören" der Datenkommunikation zu identifizieren und so den Kode zu entschlüsseln, wird dies durch die Zuordnungsschwierigkeit mehrerer Autentifikationsdaten erheblich erschwert.

Eine weitere Steigerung der Manipulationssicherheit ergibt sich, wenn in wenigstens einem der Speicher der Geberanordnung oder der Empfangseinrichtung variable Autentifikationsdaten und wenigstens im jeweils anderen Speicher der Empfangseinrichtung oder der Geberanordnung ein Prüfalgorithmus abgelegt sind, mittels eines dem Speicher für die Autentifikationsciaten zugeordneten Dekoders die hin- und mittels des Prüfalgorithmus verändert rückübermittelten Autentifikationsdaten auf Gültigkeit überprüft werden und erst bei Gültigkeit beider Autentifikationsdaten der Speicher der Empfangseinrichtung und/oder der Sensor und/oder der Aktors freigegeben werden. I)er Prüfalgorithmus kann exklusive Identnummern der zur Kommunikation berechtigten Partner aus Geberanordnungen und Empfangseinheiten einbeziehen.

Da die übertragenen Autentifikationsdaten ständig verändert werden und der Kodeschlüssel im gespeicherten, aber nicht übertragenen Prüfalgorithmus steckt, würde ein "Abhören" der Datenkommunikation nur einiger weniger Datenübertragungsaktionen nicht mehr zum Entschlüsseln des Kodes ausreichen.

Vorzugsweise werden im Speicher der Geberanordnung und/oder der Empfangseinrichtung Protokolldaten der erfolgten Datenkommunikation und Autentifikationsdaten abgelegt. So kann die Geberanordnung protokollieren, welche Empfangsvorrichtungen bedient wurden und die Empfangsvorrichtung kann kann protokollieren, welche Geber den Autentifikationsprozeß durchgeführt haben.

Hierdurch lassen sich Datenübertragungsaktionen rückverfolgen und so Manipulationsversuche aber auch Mißbrauch mit berechtigten Geräten aufdecken.

Nachfolgend wird die Erfindung anhand der Zeichnung näher erläutert.

In der Zeichnung zeigen:
- Fig. 1: ein Blockschaltbild einer Geberanordnung,
- Fig. 2: ein Blockschaltbild einer Empfangseinrichtung,
- Fig. 3: eine Ausgestaltung einer Geberanordnung und
- Fig. 4: eine Ausgestaltung einer Empfangseinrichtung.

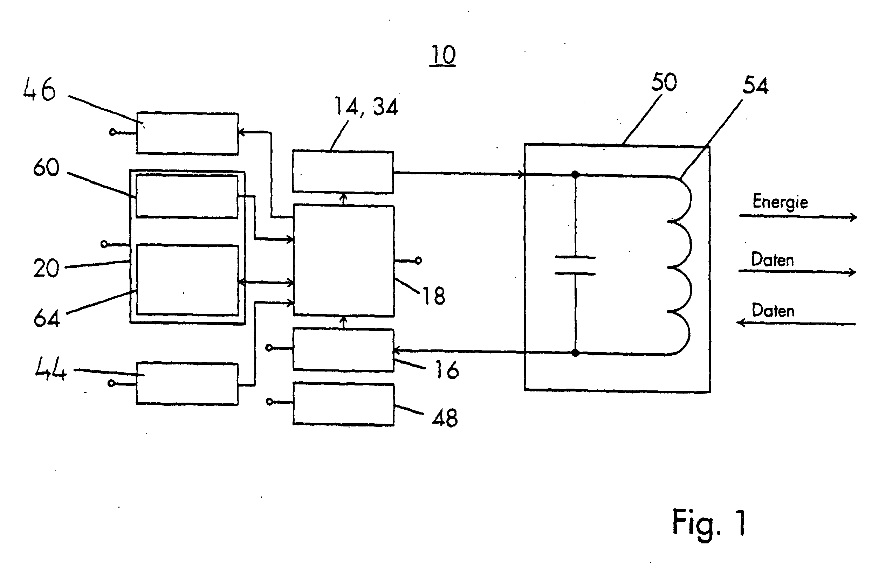

Die in Fig. 1 als Blockschaltbild dargestellte Geberanordnung 10 umfaßt einen Datensender 14, der auch gleichzeitig als Energiesender 34 dient, einen Datenempfänger 16, einen Speicher 20, eine Tastatur 44, eine Anzeige 46, eine Steuereinheit 18, eine Energiequelle 48 und einen gleichzeitig als Sende- und Empfangsantenne dienenden Schwingkreis 50. Über den Schwingkreis 50 werden Daten und Energie zur Empfangseinrichtung 12 übertragen und von der Empfangseinrichtung 12 stammende Daten empfangen. Die Steuerung des Datensenders 14 und Datenempfängers 16 sowie des Speichers 20, der Anzeige und der Tastatur erfolgt durch die Steuereinheit 18. Die Steuereinheit 18 übernimmt auch gleichzeitig die Funktion eines Dekoders 40 zur Prüfung der Gültigkeit von empfangenen Daten. Der Speicher 20 ist unterteilt in einen wiederholt beschreibbaren Bereich und einen nicht- oder einmalig beschreibbaren Bereich, in dem eine exklusive Identnummer der Geberanordnung 10 gespeichert ist.

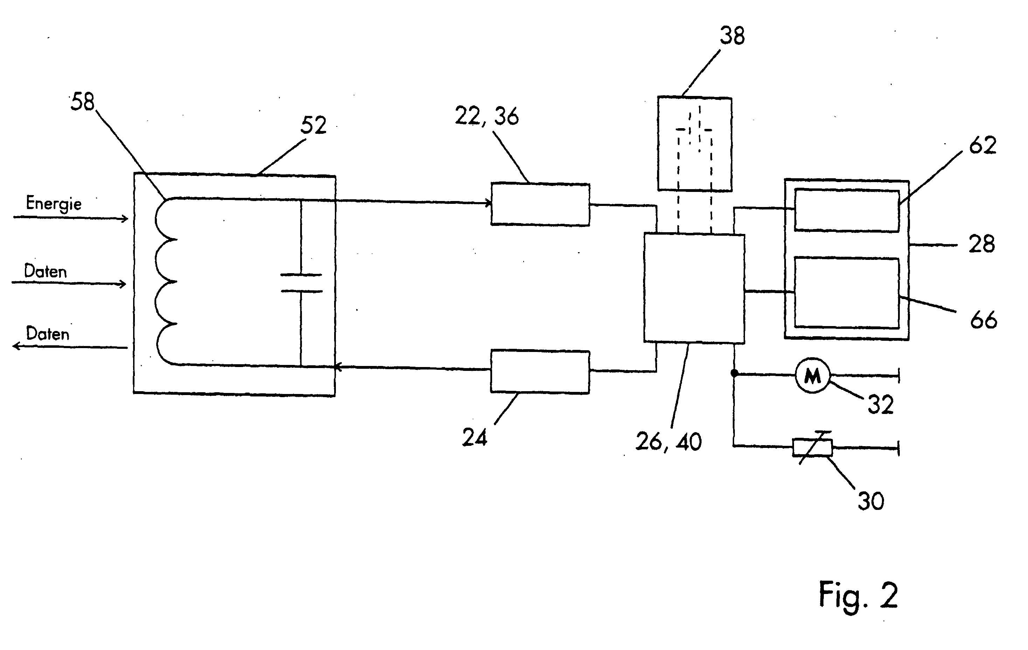

Die in Fig. 2 als Blockschaltbild dargestellte Empfangseinrichtung 12 hat teilweise ähnliche Funktionsblöcke wie die vorbeschriebene Geberanordnung 10. So ist auch bei der Empfangseinrichtung 12 ein Datensender 24, ein Datenempfänger 22, ein Speicher 28, eine Steuereinheit 26 und ein gleichzeitig als Sende- und Empfangsantenne dienender Schwingkreis 52 vorhanden. Der Datenempfänger 22 bildet gleichzeitig einen Energieempfänger 36. Über den Schwingkreis 52 werden Daten zur Geberanordnung 10 übertragen und von der Geberanordnung 10 stammende Daten sowie Energie empfangen. Die Steuerung des Datensenders 24 und Datenempfängers 22 sowie des Speichers 28 erfolgt durch die Steuereinheit 26. Ebenso übernimmt die Steuereinheit 26 die Funktion eines Dekoders 42 zur Prüfung der Gültigkeit von empfangenen Daten. Auch der Speicher 28 ist unterteilt in einen wiederholt beschreibbaren Bereich und einen nicht- oder einmalig beschreibbaren Bereich, in dem eine exklusive Identnummer der Empfangseinrichtung 12 gespeichert ist. Ergänzend kann ein temporärer Energiespeicher 38 vorhanden sein.

Zusätzlich ist die Empfangseinrichtung 12 mit einem Aktor 32 und einem Sensor 30 verbunden. Der Aktor 32 und der Sensor 30 werden von der Steuereinheit 26 gesteuert. Die Energieversorgung des Aktors 32 und Sensors 30 erfolgt drahtlos von der Geberanordnung 10 zur Empfangseinrichtung 12.

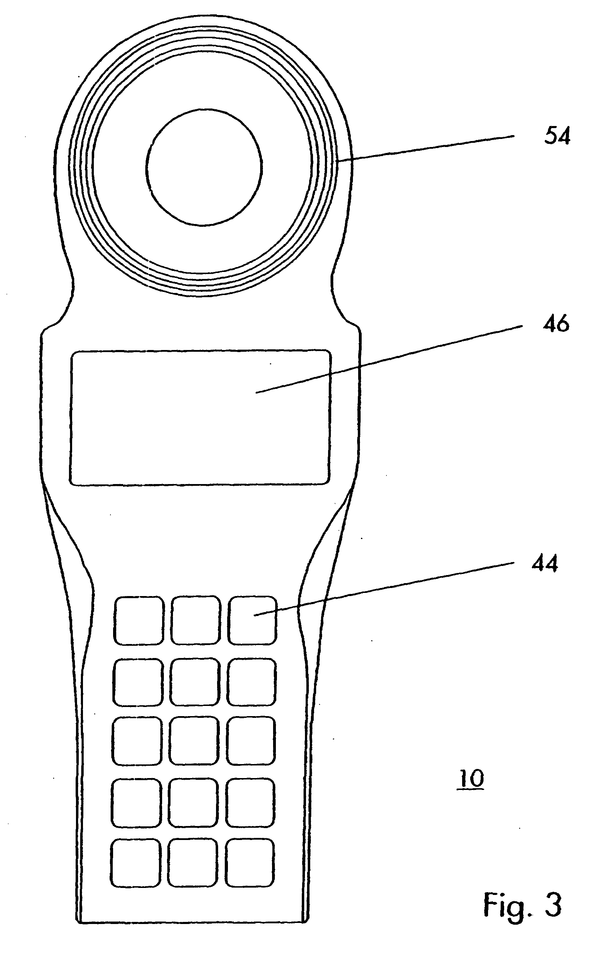

Fig. 3 zeigt eine Ausgestaltung einer Geberanordnung 10. Die in Fig. 1 beschriebenen Funktionsblöcke sind hier in einem gemeinsamen Gehäuse untergebracht. Äußerlich sichtbar ist die Anzeige 46 sowie die Tastatur 44. Ferner ist ein Bereich erkennbar, in dem die Spule 54 des Schwingkreises 50 untergebracht ist. Die Spule 54 ist in diesem Fall so bemessen, daß auch die Energie zum Betrieb des Sensors 30 und Aktors 32 der Empfangseinrichtung 12 übertragen werden kann.

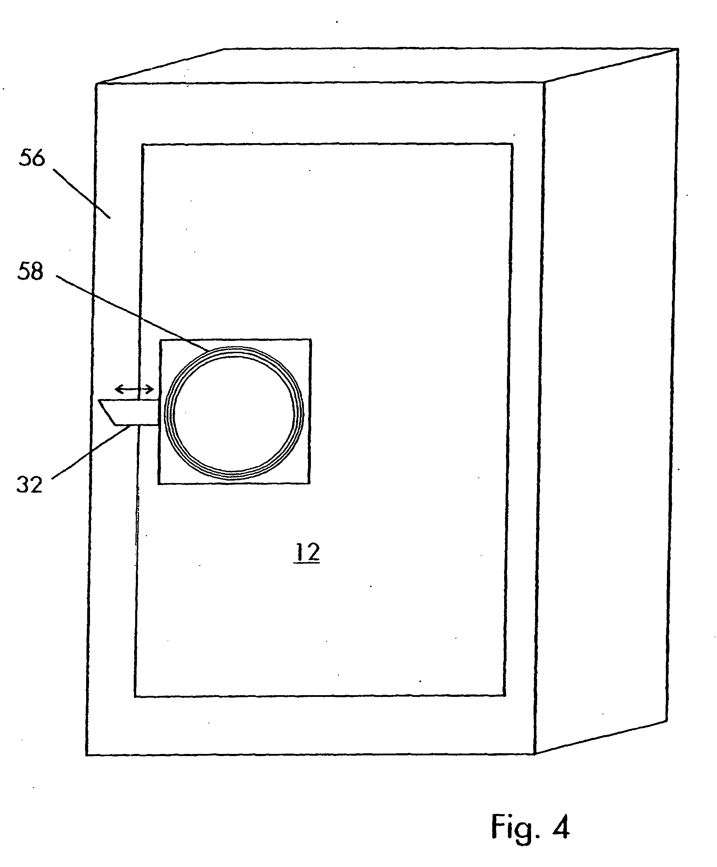

Fig. 4 zeigt eine Ausgestaltung einer Empfangseinrichtung 12, die hier manipulationssicher in einem Container 56 eingebaut ist. Die Empfangseinrichtung 12 umfaßt die Funktionsblöcke aus Fig. 2 und ferner einen Aktor 32 und einen Sensor 30. Der Sensor 30 kann zum Beispiel als Temperatursensor ausgebildet sein, um die Temperatur im Inneren eines Containers 56 oder Behälters erfassen und von außen überwachen zu können. Der Aktor 32 ist hier als Motorriegel ausgebildet, um die Tür mechanisch zu ver- und entriegeln, ohne daß hierfür ein mechanischer Schlüssel benötigt wird. Als Teil der Empfangseinrichtung 12 ist die Spule 58 des Schwingkreises 52 erkennbar, die in ihrer Größe etwa auf die Größe der Spule 54 in der Geberanordnung 10 abgestimmt ist. Auf diese Weise ist eine optimale Kopplung und damit eine maximale Energieübertragung gewährleistet.

Der hier beschriebene Anwendungsfall des Einbaus der Empfangseinrichtung 12 in einen Container 56 ist besonders prädestiniert für die Erfindung, da die Empfangseinrichtung 12, von Ausnahmen abgesehen, nicht vom öffentlichen Niederspannungsnetz mit Energie versorgt werden kann und bei Batteriebetrieb keine Gewähr besteht, daß nötige Wartungsarbeiten termingerecht durchgeführt werden.

Bei der erfindungsgemäßen Ausgestaltung wird sowohl die Energie zu Betrieb der Funktionsblöcke der Empfangseinrichtung 12 als auch zum Betrieb des Sensors 30 und des Aktors 32 drahtlos übertragen. Das Schloß kann somit nur von einer Geberanordnung 10 geöffnet werden, die dazu berechtigt ist. Eine mechanische Öffnung ohne Benutzung der Geberanordnung 10 ist nicht möglich oder nur durch Zerstörung des Containers 56. Dadurch ergibt sich eine hohe Sicherheit geben Manipulationen.

Zum Schutz vor Manipulationen mit nicht freigegebenen Geberanordnungen, die aber das benutzte Übertragungsprotokoll beherrschen, kann folgendermaßen verfahren werden.

Die exklusiven Identnummern der Geberanordnungen und Empfangseinrichtungen, die in einem nichtbeschreibbaren oder nur einmalig beschreibbaren Speicherbereich 60; 62 abgelegt sind, dienen zur Festlegung, welche Geberanordnungen und Empfangseinrichtungen als Partner zur gegenseitigen Kommunikation zugelassen sind. Dazu werden die Identnummern der zulässigen Partner im wiederbeschreibbaren Speicherbereich 64; 66 der anderen Partner abgelegt. Wenn die Geberanordnung 10 elektromagnetisch mit einer Empfangseinrichtung 12 gekoppelt wird und die Funktionsblöcke der Empfangseinrichtung 12 mit Energie versorgt werden und in Betrieb gehen, erfolgt zunächst ein Austausch von Autentifikationsdaten.

Bei einem besonders manipulationssicheren Verfahren übermitteln die Geberanordnung 10 und die Empfangseinrichtung 12 einander Autentifikationsdaten, die durch einen Prüfalgorithmus verändert und rückübertragen werden. Da der Prüfalgorithmus beiden Geräten bekannt ist, kann so die Gültigkeit der Autentifikationsdaten überprüft werden, ohne daß es durch Abhören gelingt, die Autentifikationsdaten zu entschlüsseln. Die Autentifikationsdaten werden bei jeder neuen Übertragung geändert. Der Prüfalgorithmus kann durch die Identnummern beeinflußt werden. Erst wenn die miteinander gekoppelten Geräte die Gültigkeit der Autentifikationsdaten ermittelt haben, wird der Speicher 28 sowie der Aktor 32 und der Sensor 30 durch die Steuereinheit 26 der Empfangseinrichtung 12 freigegeben.

## Patentansprüche

1. Drahtloses Datenübertragungssystem, bestehend aus einer mobilen Geberanordnung (10) und einer stationären oder mobilen Empfangseinrichtung (12), wobei die Geberanordnung (10) wenigstens einen Datensender (14), einen Datenempfänger (16), eine Steuereinheit (18) und einen Speicher (20) umfaßt und die Empfangseinrichtung (12) wenigstens einen Datenempfänger (22), einen Datensender (24), eine Steuereinheit (26) und einen Speicher (28) umfaßt **dadurch gekennzeichnet, daß** die Empfangseinrichtung (12) mit einem von der Steuereinheit (26) gesteuerten Sensor (30) und/oder Aktor (32) verbunden ist, und daß bei Ausfall einer gesonderten Energieversorgung der Empfangseinrichtung (12) oder auch generell die Energieversorgung der Empfangseinrichtung (12) sowie des Sensors (30) und/oder Aktors (32) drahtlos mittels eines Energiesenders (34) zu einem Energieempfänger (36) der Empfangseinrichtung (12) erfolgt.

2. Drahtloses Datenübertragungssystem nach Anspruch 1, **dadurch gekennzeichnet, daß** der Energieempfänger (36) einen temporären Energiespeicher (38) umfaßt, der durch Energieübertragung von der Geberanordnung (10) zur Empfangseinrichtung (12) aufladbar ist und kurzzeitig die Energieversorgung des Sensors (30) und/oder Aktors (32) übernimmt.

3. Drahtloses Datenübertragungssystem nach Anspruch 1, **dadurch gekennzeichnet, daß** die Energieversorgung des Sensors (30) und/oder Aktors (32) ausschließlich durch drahtlose Energieübertragung während dessen Betrieb erfolgt.

4. Drahtloses Datenübertragungssystem nach Anspruch 1, **dadurch gekennzeichnet, daß** die Energieversorgung des Sensors (30) und/oder Aktors (32) sowohl durch drahtlose Energieübertragung während dessen Betrieb als auch durch Pufferung durch einen temporären Energiespeichers (38) erfolgt, der durch drahtlose Energieübertragung aufladbar ist.

5. Drahtloses Datenübertragungssystem nach einem der Ansprüche 1 bis 4, **dadurch gekennzeichnet, daß** der Energiesender (34) zusammen mit dem Datensender (14) und Datenempfänger (16) der Geberanordnung (10) vereint ist oder als gesondertes Gerät ausgebildet ist.

6. Drahtloses Datenübertragungssystem nach einem der Ansprüche 1 bis 5, **dadurch gekennzeichnet, daß** die Empfangseinrichtung (12) einen Dekoder (40) umfaßt, welcher auf Anforderung der Steuereinheit (26) der Empfangseinrichtung (12) von der Geberanordnung (10) gesendete Autentifikationsdaten auswertet und bei Gültigkeit der Autentifikationsdaten den Speicher (28) und/oder Sensor (30) und/oder Aktor (32) freigibt.

7. Drahtloses Datenübertragungssystem nach einem derAnsprüche 1 bis 6, **dadurch gekennzeichnet, daß** sowohl im Speicher (20) der Geberanordnung (10) als auch im Speicher (28) der Empfangseinrichtung (12) Autentifikationsdaten abgelegt sind, daß sowohl in der Geberanordnung (10) als auch in der Empfangseinrichtung (12) Dekoder (40, 42) vorgesehen sind, mittels der die auf Anforderung gegenseitig übermittelten Autentifikationsdaten auf Gültigkeit überprüfbar sind, daß ein bidirektionaler Datenaustausch zwischen Geberanordnung (10) und Empfangseinrichtung (12) stattfindet und erst bei Gültigkeit beider Autentifikationsdaten der Speicher (28) der Empfangseinrichtung (12) und/oder der Sensor (30) und/oder der Aktors (32) freigebbar sind.

8. Drahtloses Datenübertragungssystem nach einem der Ansprüche 1 bis 6, **dadurch gekennzeichnet, daß** wenigstens in einem der Speicher (20) der Geberanordnung (10) oder der Empfangseinrichtung (12) variable Autentifikationsdaten und wenigstens im jeweils anderen Speicher (20, 28) der Empfangseinrichtung (12) oder der Geberanordnung (10) ein Prüfalgorithmus abgelegt sind, daß mittels eines dem Speicher für die Autentifikationsdaten zugeordneten Dekoders (40; 42) die hinund mittels des Prüfalgorithmus verändert rückübermittelten Autentifikationsdaten auf Gültigkeit überprüfbar sind und erst bei Gültigkeit beider Autentifikationsdaten der Speicher (28) der Empfangseinrichtung (12) und/oder der Sensor (30) und/oder der Aktors (32) freigebbar sind.

9. Drahtloses Datenübertragungssystem nach einem der Ansprüche 1 bis 8, **dadurch gekennzeichnet, daß** im Speicher (20, 28) der Geberanordnung (10) und/oder der Empfangseinrichtung (12) Protokolldaten der erfolgten Datenkommunikation und Autentifikationsdaten ablegbar sind.

## Claims

1. A wireless data transmission system, consisting of a mobile transmitter arrangement (10) and a stationary or mobile receiving device (12), wherein the transmitter arrangement (10) comprises at least a data transmitter (14), a data receiver (16), a control unit (18) and a memory (20) and the receiving device (12) comprises at least a data receiver (22), a data transmitter (24), a control unit (26) and a memory (28), **characterised in that** the receiving device (12) is connected with a sensor (30) and/or actuator (32) controlled by the control unit (26) and **in that**, in the event of failure of a separate power supply for the receiving device (12) or indeed generally, power is supplied to the receiving device (12) and the sensor (30) and/or actuator (32) wirelessly by means of a power transmitter (34) transmitting to a power receiver (36) of the receiving device (12).

2. A wireless data transmission system according to claim 1, **characterised in that** the power receiver (36) comprises a temporary power storage means (38), which may be charged by power transmission from the transmitter arrangement (10) to the receiving device (12) and briefly takes over power supply of the sensor (30) and/or actuator (32).

3. A wireless data transmission system according to claim 1, **characterised in that** power is supplied to the sensor (30) and/or actuator (32) solely by wireless power transmission during operation thereof.

4. A wireless data transmission system according to claim 1, **characterised in that** power is supplied to the sensor (30) and/or actuator (32) both by wireless power transmission during operation thereof and by buffering by a temporary power storage means (38), which may be charged by wireless power transmission.

5. A wireless data transmission system according to one of claims 1 to 4, **characterised in that** the power transmitter (34) is combined with the data transmitter (14) and the data receiver (16) of the transmitter arrangement (10) or takes the form of a separate apparatus.

6. A wireless data transmission system according to one of claims 1 to 5, **characterised in that** the receiving device (12) comprises a decoder (40), which analyses authentication data transmitted by the transmitter arrangement (10) at the request of the control unit (26) of the receiving device (12) and enables the memory (28) and/or sensor (30) and/or actuator (32) if the authentication data are valid.

7. A wireless data transmission system according to one of claims 1 to 6, **characterised in that** authentication data are stored both in the memory (20) of the transmitter arrangement (10) and in the memory (28) of the receiving device (12), **in that** decoders (40, 42) are provided both in the transmitter arrangement (10) and in the receiving device (12), by means of which decoders (40, 42) the authentication data transmitted bilaterally on request may be checked for validity, **in that** a bidirectional exchange of data takes place between transmitter arrangement (10) and receiving device (12) and only if both lots of authentication data are valid may the memory (28) of the receiving device (12) and/or the sensor (30) and/or the actuator (32) be enabled.

8. A wireless data transmission system according to one of claims 1 to 6, **characterised in that** variable authentication data are stored at least in one of the memories (20) of the transmitter arrangement (10) or the receiving device (12) and a test algorithm is stored at least in the respective other memory (20, 28) of the receiving device (12) or the transmitter arrangement (10), **in that** the authentication data transmitted out, and back once changed by means of the test algorithm, may be checked for validity by means of a decoder (40; 42) assigned to the memory for the authentication data and the memory (28) of the receiving device (12) and/or the sensor (30) and/or the actuator (32) may be enabled only if both lots of authentication data are valid.

9. A wireless data transmission system according to one of claims 1 to 8, **characterised in that** protocol data from the data communication which has taken place and authentication data may be stored in the memory (20, 28) of the transmitter arrangement (10) and/or the receiving device (12).

## Revendications

1. Système de transmission de données sans fil, comprenant un dispositif transmetteur mobile (10) et un dispositif récepteur stationnaire ou mobile (12), le dispositif transmetteur (10) comprenant au moins un émetteur de données (14), un récepteur de données (16) et une unité de commande (18), ainsi qu'une mémoire (20) et le dispositif récepteur (12) comprenant au moins un récepteur de données (22), un émetteur de données (24), une unité de commande (26) et une mémoire (28), **caractérisé en ce que** le dispositif récepteur (12) est relié à un capteur (30), commandé par l'unité de commande (26), et/ou à un acteur (32), qu'en cas de panne d'une alimentation en énergie séparée du dispositif récepteur (12), l'alimentation en énergie du dispositif récepteur (12), ainsi que du capteur (30) et/ou de l'acteur (30) a lieu, même généralement, sans fil au moyen d'un émetteur d'énergie (34) vers un récepteur d'énergie (36) du dispositif récepteur (12).

2. Système de transmission de données sans fil suivant la revendication 1, **caractérisé en ce que** le récepteur d'énergie (36) comprend un réservoir d'énergie temporaire (38) qui peut être rechargé par transmission d'énergie du dispositif transmetteur (10) au dispositif récepteur (12) et qui assure temporairement l'alimentation en énergie du capteur (30) et/ou de l'acteur (32).

3. Système de transmission de données sans fil suivant la revendication 1, **caractérisé en ce que** l'alimentation en énergie du capteur (30) et/ou de l'acteur (32) a lieu en service de ceux-ci, exclusivement par transmission d'énergie sans fil.

4. Système de transmission de données sans fil suivant la revendication 1, **caractérisé en ce que** l'alimentation en énergie du capteur (30) et/ou de l'acteur (32) a lieu en service de ceux-ci, aussi bien par transmission d'énergie sans fil que par accumulation au moyen d'un réservoir d'énergie temporaire (38), qui peut être rechargé par transmission d'énergie sans fil.

5. Système de transmission de données sans fil suivant une des revendications 1 à 4, **caractérisé en ce que** l'émetteur d'énergie (34) est regroupé avec l'émetteur de données (14) et le récepteur de données (16) du dispositif transmetteur (10) ou conçu comme appareil séparé.

6. Système de transmission de données sans fil suivant une des revendications 1 à 5, **caractérisé en ce que** le dispositif récepteur (12) comprend un décodeur (40), qui évalue des données d'authentification émises par le dispositif transmetteur (10) sur demande de l'unité de commande (26) du dispositif récepteur (12) et qui libère la mémoire (28) et/ou le capteur (30) et/ou l'acteur (32) en cas de validité des données d'authentification.

7. Système de transmission de données sans fil suivant une des revendications 1 à 6, **caractérisé en ce que** des données d'authentification sont stockées aussi bien dans la mémoire (20) du dispositif transmetteur (10), que dans la mémoire (28) du dispositif récepteur (12), que des décodeurs (40, 42) sont prévus aussi bien dans le dispositif transmetteur (10), que dans le dispositif récepteur (12), au moyen desquels la validité des données d'authentification transmises réciproquement sur demande peut être vérifiée, qu'un échange de données bidirectionnel a lieu entre le dispositif transmetteur (10) et le dispositif récepteur (12) et que la mémoire (28) du dispositif récepteur (12) et/ou le capteur (30) et/ou l'acteur (32) peuvent être libérés uniquement en cas de validité des deux données d'authentification.

8. Système de transmission de données sans fil suivant une des revendications 1 à 6, **caractérisé en ce qu'**au moins dans une des mémoires (20) du dispositif transmetteur (10) et ou du dispositif récepteur (12) sont stockées des données d'authentification variables et qu'au moins dans l'autre mémoire respective (20, 28) du dispositif récepteur (12) ou du dispositif transmetteur (10) est stocké un algorithme de vérification, qu'au moyen d'un décodeur (40, 42), associé à la mémoire pour les données d'authentification, la validité des données d'authentification, transmises et retransmises modifiées au moyen de l'algorithme de vérification, peut être vérifiée et que la mémoire (28) du dispositif récepteur (12) et/ou du capteur (30) et/ou de l'acteur (32) peuvent être libérés uniquement en cas de validité des deux données d'authentification.

9. Système de transmission de données sans fil suivant une des revendications 1 à 8, **caractérisé en ce que** des données de contrôle de la communication de données effectuée et des données d'authentification peuvent être stockées dans la mémoire (20, 28) du dispositiftransmetteur (10) et/ou du dispositif récepteur (12).
